# EUROPÄISCHE PATENTSCHRIFT

(11) **EP 4 670 260 B1**
(45) Veröffentlichungstag und Bekanntmachung des Hinweises auf die Patenterteilung: **16.09.2026**
(21) Anmeldenummer: 24703715.3
(22) Anmeldetag: 01.02.2024
(51) Int. Cl.: H02K 11/33, H02K 16/04, H02K 21/24, H02K 7/14

(54) **ELEKTROMOTOR UND ELEKTROWERKZEUG MIT EINEM ELEKTROMOTOR**
ELECTRIC MOTOR AND POWER TOOL HAVING AN ELECTRIC MOTOR
MOTEUR ÉLECTRIQUE ET OUTIL ÉLECTRIQUE DOTÉ D'UN MOTEUR ÉLECTRIQUE

(30) Priorität: 20.02.2023 DE 102023201438
(43) Veröffentlichungstag der Anmeldung: 31.12.2025
(73) Patentinhaber: Robert Bosch GmbH, 70442 Stuttgart (DE)
(72) Erfinder: MUCSI, Gyoergy, 71254 Ditzingen (DE)
(86) Internationale Anmeldenummer: PCT/EP2024/052519
(87) Internationale Veröffentlichungsnummer: WO 2024/175327

(56) Entgegenhaltungen:
- WO-A1-2022/023145
- DE-A1- 102021 201 617
- JP-A- 2001 239 474
- US-A1- 2008 246 363
- US-A1- 2009 160 392

## Beschreibung

### Stand der Technik

Die vorliegende Erfindung betrifft einen Elektromotor, insbesondere einen Axialflussmotor, mit einem Rotor sowie einem ersten und einem zweiten Stator, wobei der Rotor mit einer Motorwelle verbunden ist und in axialer Richtung der Motorwelle zwischen dem ersten Stator und dem zweiten Stator angeordnet ist.

Aus dem Stand der Technik US 2009/160392 A1 ist ein als Axialflussmotor ausgebildeter Elektromotor bekannt, der einen Rotor sowie einen ersten und einen zweiten Stator aufweist. Dabei ist der Rotor mit einer Motorwelle verbunden und in axialer Richtung der Motorwelle zwischen dem ersten Stator und dem zweiten Stator angeordnet.

### Offenbarung der Erfindung

Gemäß des unabhängigen Anspruchs 1 betrifft die Erfindung einen Elektromotor, insbesondere einen Axialflussmotor, mit einem Rotor sowie einem ersten und einem zweiten Stator, wobei der Rotor mit einer Motorwelle verbunden ist und in axialer Richtung der Motorwelle zwischen dem ersten Stator und dem zweiten Stator angeordnet ist. Der erste Stator ist für einen Betrieb mit einem ersten Spannungsniveau, insbesondere einer Netzspannung, ausgeführt und der zweite Stator ist für einen Betrieb mit einem zweiten Spannungsniveau, insbesondere einer Akkuspannung, ausgeführt.

Die Erfindung ermöglicht somit die Bereitstellung eines Elektromotors, bei dem durch eine Verwendung eines ersten und zweiten Stators ein vereinfachter Aufbau für einen Betrieb mit unterschiedlichen Spannungsniveaus ermöglicht werden kann.

Bevorzugt ist der erste Stator über eine Netzleitung mit einem Spannungsnetz verbindbar, und der zweite Stator ist mit einem Akkupack verbindbar.

Somit kann auf einfache Art und Weise sowohl ein Betrieb über eine Netzleitung, als auch ein Betrieb über ein Akkupack ermöglicht werden.

Vorzugsweise ist dem ersten Stator eine erste Elektronikbaugruppe und dem zweiten Stator eine zweite Elektronikbaugruppe zugeordnet, wobei die erste und zweite Elektronikbaugruppe jeweils zur Motorsteuerung ausgebildet ist.

Somit kann eine effiziente, und genau auf die vom Nutzer gewählte Antriebsart - Akkubetrieb oder Netzbetrieb - abgestimmte Motorsteuerung im jeweiligen Betrieb ermöglicht werden.

Der erste Stator ist vorzugsweise in einem ersten axialen Abstand zum Rotor angeordnet, und der zweite Stator ist in einem zweiten axialen Abstand zum Rotor angeordnet, wobei der erste axiale Abstand und der zweite axiale Abstand Betriebsart-spezifisch einstellbar sind.

Somit kann sicher und zuverlässig der erste oder zweite Stator zum Betrieb im jeweils zugeordneten Spannungsniveau aktiviert werden.

Bei einer Bestromung des ersten Stators in einer Netzbetriebsart ist bevorzugt der erste axiale Abstand kleiner als der zweite axiale Abstand eingestellt.

Somit kann effizient ein Netzbetrieb ermöglicht werden und der Bremseffekt des für den Akkubetrieb ausgelegten Stators durch den erhöhten Luftspalt zumindest annähernd eliminiert werden.

Bei einer Bestromung des zweiten Stators in einer Akkubetriebsart ist vorzugsweise der zweite axiale Abstand kleiner als der erste axiale Abstand eingestellt.

Somit kann ein effizienter Akkubetrieb ermöglicht werden und der Bremseffekt des für den Netzbetrieb ausgelegten Stators durch den erhöhten Luftspalt zumindest annähernd eliminiert werden.

Gemäß einer Ausführungsform liegt in der Netzbetriebsart der erste axiale Abstand in einem Bereich von 0,05 mm bis 1 mm und der zweite axiale Abstand weist mindestens 0,06 mm auf, und in der Akkubetriebsart liegt der zweite axiale Abstand in einem Bereich von 0,05 mm bis 1 mm und der erste axiale Abstand weist mindestens 0,06 mm auf.

Somit kann präzise und schnell ein geeigneter erster und zweiter axialer Abstand vorgegeben werden.

Gemäß einer Ausführungsform sind der erste und zweite Stator miteinander verbunden und bilden eine Statoreinheit aus, wobei eine Verschiebevorrichtung zum axialen Verschieben der Statoreinheit in einem Motorgehäuse vorgesehen ist.

Somit kann auf einfache Art und Weise ein Umschalten zwischen Netzbetrieb und Akkubetrieb ermöglicht werden und ein zugeordneter Luftspalt der Betriebsart entsprechend realisiert werden.

Bevorzugt ist die Verschiebevorrichtung dazu ausgebildet, bei einem Beenden einer Bestromung des ersten Stators zur Erzeugung und/oder Verstärkung eines Bremseffektes den ersten Stator axial zum Rotor hin zu verschieben, und bei einem Beenden einer Bestromung des zweiten Stators zur Erzeugung und/oder Verstärkung eines Bremseffektes den zweiten Stator axial zum Rotor hin zu verschieben.

Somit kann ein sicherer und robuster Bremseffekt ermöglicht werden.

Darüber hinaus stellt die vorliegende Erfindung ein Elektrowerkzeug, insbesondere eine Handwerkzeugmaschine, mit einem erfindungsgemäßen Elektromotor bereit.

Die Erfindung ermöglicht somit die Bereitstellung eines Elektrowerkzeugs mit einem Elektromotor, bei dem durch den ersten und zweiten Stator ein vereinfachter Aufbau für einen Betrieb mit unterschiedlichen Spannungsniveaus bereitgestellt werden kann.

Bevorzugt ist die erste Elektronikbaugruppe einem Netzbetrieb zugeordnet und die zweite Elektronikbaugruppe ist einem Akkubetrieb zugeordnet, wobei die erste und/oder zweite Elektronikbaugruppe in das Elektrowerkzeug integriert sind.

Somit kann eine sichere und zuverlässige Anordnung der ersten und/oder zweiten Elektronikbaugruppe im Elektrowerkzeug ermöglicht werden.

Vorzugsweise ist die erste Elektronikbaugruppe einem Netzbetrieb zugeordnet und die zweite Elektronikbaugruppe ist einem Akkubetrieb zugeordnet, wobei die erste Elektronikbaugruppe in die Netzleitung integriert oder als eine in die Akkupackschnittstelle des Elektrowerkzeugs einsteckbare Einheit ausgebildet ist.

Somit kann leicht und unkompliziert eine alternative Anordnung der ersten Elektronikbaugruppe ermöglicht werden.

Gemäß einer Ausführungsform ist der ersten Elektronikbaugruppe eine dritte Elektronikbaugruppe zugeordnet, wobei die dritte Elektronikbaugruppe im Elektrowerkzeug angeordnet ist, in die erste Elektronikeinheit integriert ist oder in der einsteckbaren Einheit angeordnet ist.

Somit kann auf einfache Art und Weise ein kompaktes und leichtes Elektrowerkzeug bereitgestellt werden, das durch eine Aufteilung der Funktionen der ersten Elektronikbaugruppe ermöglicht werden kann.

Gemäß einer Ausführungsform ist die Netzleitung lösbar am Elektrowerkzeug angeordnet.

Somit kann leicht und unkompliziert eine Anordnung der Netzleitung am Elektrowerkzeug ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische Ansicht eines als Handwerkzeugmaschine ausgebildeten Elektrowerkzeugs mit einem erfindungsgemäßen Elektromotor,
- Fig. 2: eine Schnittansicht des erfindungsgemäßen Elektromotors von Fig. 1,
- Fig. 3: eine schematische Ansicht des erfindungsgemäßen Elektromotors von Fig. 1 und Fig. 2, gemäß einer weiteren Ausführungsform,
- Fig. 4: eine schematische Ansicht des erfindungsgemäßen Elektromotors von Fig. 3 in einer ersten Betriebsart,
- Fig. 5: eine schematische Ansicht des erfindungsgemäßen Elektromotors von Fig. 3 und Fig. 4 in einer weiteren Betriebsart,
- Fig. 6: eine schematische Ansicht des als Handwerkzeugmaschine ausgebildeten Elektrowerkzeugs von Fig. 1, mit einer alternativen Anordnung von dem Elektromotor zugeordneten Elektronikbaugruppen,
- Fig. 7: eine schematische Ansicht des als Handwerkzeugmaschine ausgebildeten Elektrowerkzeugs von Fig. 1 und Fig. 6, mit einer weiteren Anordnung der Elektronikbaugruppen, und
- Fig. 8: eine schematische Ansicht des als Handwerkzeugmaschine ausgebildeten Elektrowerkzeugs von Fig. 1, mit einer alternativen Anordnung einer dem Elektromotor zugeordneten Netzleitung.

### Beschreibung der Ausführungsbeispiele

In den Figuren werden Elemente mit gleicher oder vergleichbarer Funktion mit identischen Bezugszeichen versehen und nur einmal genauer beschrieben.

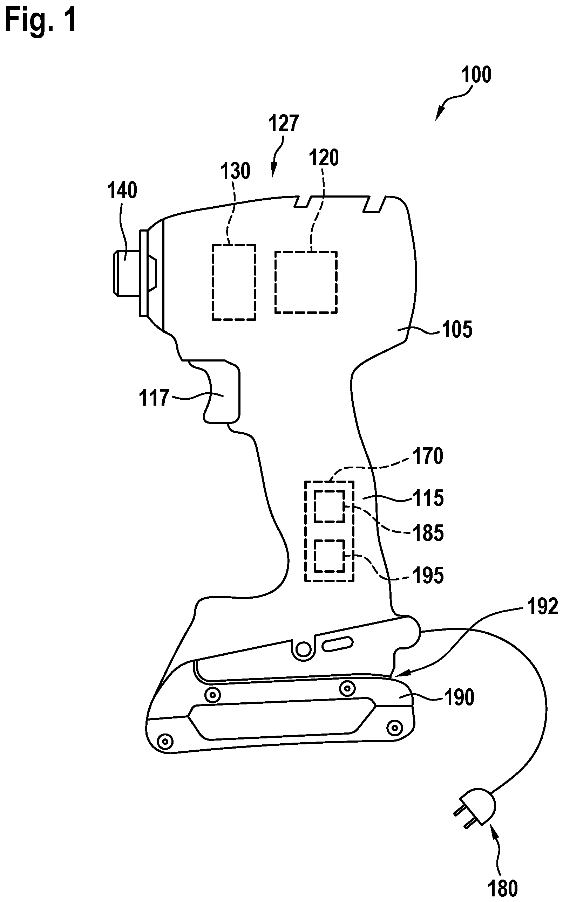

Fig. 1 zeigt ein beispielhaft als Handwerkzeugmaschine ausgebildetes Elektrowerkzeug 100, das illustrativ ein Gehäuse 105 mit einem Handgriff 115 aufweist. Bevorzugt ist dem als Handwerkzeugmaschine ausgebildeten Elektrowerkzeug 100 eine Werkzeugaufnahme 140 zur Aufnahme eines Einsatzwerkzeugs, z.B. eines Schrauberbits, eines Bohrers, usw. zugeordnet. Es wird jedoch darauf hingewiesen, dass die vorliegende Erfindung nicht auf Handwerkzeugmaschinen wie Schrauber, Bohrhammer, Schlagschrauber, Sägen, Kreissägen beschränkt ist, sondern das Elektrowerkzeug 100 auch als Gartenwerkzeug, Elektrofahrrad usw. ausgebildet sein kann.

Gemäß einer Ausführungsform ist das Elektrowerkzeug 100 zur netzunabhängigen Stromversorgung mechanisch und elektrisch mit einem Akkupack 190 verbindbar und weist zur netzabhängigen Stromversorgung eine Netzleitung180 auf. Der Akkupack 190 ist illustrativ an einer Akkupackschnittstelle 192 des Elektrowerkzeugs 100 lösbar angeordnet. Das Elektrowerkzeug 100 ist dabei entweder netzunabhängig oder netzabhängig betreibbar.

Im Gehäuse 105 ist bevorzugt eine Antriebseinheit 127 mit zumindest einem Elektromotor 120 angeordnet. Der Elektromotor 120 ist vorzugsweise zum Antrieb der Werkzeugaufnahme 140 und somit eines darin angeordneten Einsatzwerkzeugs ausgebildet. Der Elektromotor 120 kann z.B. über einen Handschalter 117 ein- und ausschaltbar sein. Der Antriebseinheit 127 kann ein optionales Getriebe 130 zugeordnet sein.

Bevorzugt ist eine Elektronikeinheit 170 zur Motorsteuerung vorgesehen. Vorzugsweise weist die Elektronikeinheit 170 eine erste Elektronikbaugruppe 185 auf, die der Netzleitung 180 zugeordnet ist, und eine zweite Elektronikeinheit 195, die dem Akkupack 190 zugeordnet ist. Bevorzugt sind die erste und/oder zweite Elektronikbaugruppe 185, 195 in das Elektrowerkzeug 100 integriert. Die Elektronikeinheit 170 mit der ersten und zweiten Elektronikbaugruppe 185, 195 ist gemäß einer Ausführungsform im Gehäuse 105 des Elektrowerkzeugs 100 angeordnet.

Illustrativ ist die Elektronikeinheit 170 im Handgriff 115 angeordnet. Jedoch kann die Elektronikeinheit 170, bzw. die erste und zweite Elektronikbaugruppe 185, 195, auch an beliebig anderer Stelle im Elektrowerkzeug 100 und/oder im Akkupack 190 bzw. der Netzleitung 180 angeordnet sein. Alternativ ist die erste Elektronikbaugruppe 185 in die Netzleitung 180 integriert oder in der Akkupackschnittstelle 192 des Elektrowerkzeugs 100 anordenbar. Des Weiteren kann die Netzleitung 180 lösbar am Elektrowerkzeug 100 angeordnet sein.

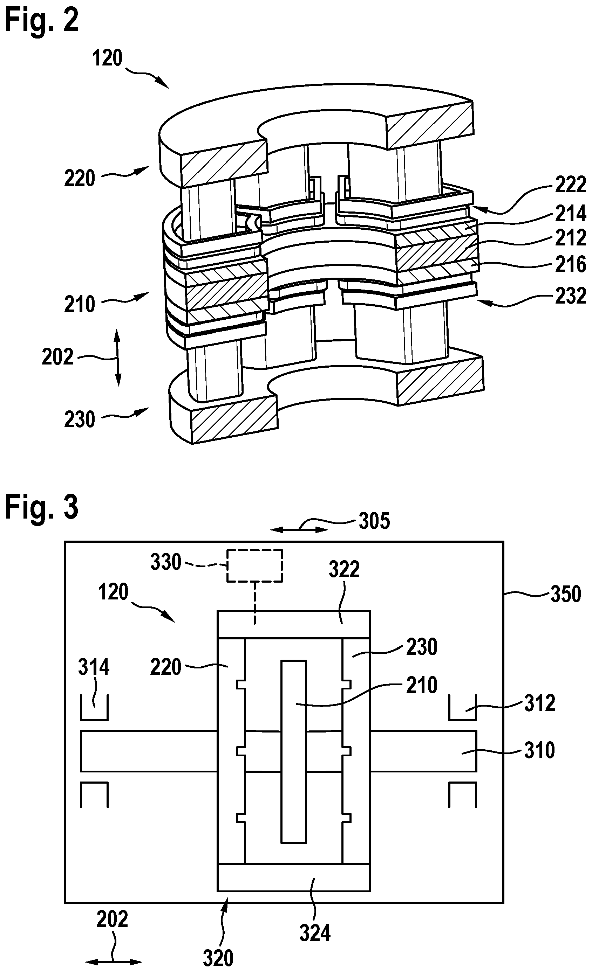

Fig. 2 zeigt den Elektromotor 120 von Fig. 1, der als Axialflussmotor ausgebildet ist. Der Elektromotor 120 weist einen Rotor 210 sowie einen ersten und zweiten Stator 220, 230 auf. Vorzugsweise ist in axialer Richtung 202 einer dem Elektromotor 120 zugeordneten Motorwelle (310 in Fig. 3) der Rotor 210 zwischen dem ersten und zweiten Stator 220, 230 angeordnet. Illustrativ ist der erste Stator 220 oberhalb des Rotors 210 angeordnet und der zweite Stator 230 ist unterhalb des Rotors 210 angeordnet.

Dem ersten Stator 220 ist vorzugsweise ein für einen Akkubetrieb ausgelegtes Wicklungsdesign 222 zugeordnet und dem zweiten Stator 230 ist ein für einen Netzbetrieb ausgelegtes Wicklungsdesign 232 zugeordnet. Des Weiteren ist bevorzugt dem Rotor 210 ein Rückschlusselement 212 zugeordnet. Vorzugsweise weist der Rotor 210, insbesondere das Rückschlusselement 212 eine erste, dem ersten Stator 220 zugewandt angeordnete Magneteinheit 214 und eine zweite, dem zweiten Stator 230 zugewandt angeordnete Magneteinheit 216 auf.

Gemäß einer Ausführungsform ist der erste Stator 220 für einen Betrieb mit einem ersten Spannungsniveau, insbesondere einer Netzspannung, ausgeführt und der zweite Stator 230 ist für einen Betrieb mit einem zweiten Spannungsniveau, insbesondere einer Akkuspannung, ausgeführt. Hierzu ist der erste Stator 220 über die Netzleitung 180 in Fig. 1 mit einem Spannungsnetz verbindbar, und der zweite Stator 230 ist mit dem Akkupack 190 verbindbar. Vorzugsweise ist dem ersten Stator 220 die erste Elektronikbaugruppe 185 zur Motorsteuerung in einem Netzbetrieb zugeordnet und dem zweiten Stator 230 ist die zweite Elektronikbaugruppe 195 zur Motorsteuerung in einem Akkubetrieb zugeordnet.

Fig. 3 zeigt den Elektromotor 120 von Fig. 1 und Fig. 2, der in einem Motorgehäuse 350 angeordnet ist, und wobei der Rotor 210 mit einer Motorwelle 310 verbunden ist. Die Motorwelle 310 ist vorzugsweise über Lagerelemente 312, 314 im Gehäuse 105 des Elektrowerkzeugs 100 von Fig. 1 gelagert. Vorzugsweise ist der Rotor 210 in axialer Richtung 202 der Motorwelle 310 zwischen dem ersten Stator 220 und zweiten Stator 230 angeordnet.

Gemäß einer Ausführungsform sind der erste und zweite Stator 220, 230 vorzugsweise über Verbindungsteile 322, 324 miteinander verbunden und bilden eine Statoreinheit 320 aus. Der Rotor 210 ist dabei vorzugsweise innerhalb der Statoreinheit 320 angeordnet. Bevorzugt ist zum axialen Verschieben der Statoreinheit 320 im Motorgehäuse 350 entlang der axialen Richtung 202 der Motorwelle 310 bzw. entlang eines Pfeils 305 eine Verschiebevorrichtung 330 vorgesehen.

Vorzugsweise ist die Verschiebevorrichtung 330 dazu ausgebildet, bei einem Beenden einer Bestromung des ersten Stators 220 zur Erzeugung und/oder Verstärkung eines Bremseffektes den ersten Stator 220 axial zum Rotor 210 hin zu verschieben, und bei einem Beenden einer Bestromung des zweiten Stators 230 zur Erzeugung und/oder Verstärkung eines Bremseffektes den zweiten Stator 230 axial zum Rotor 210 hin zu verschieben. Des Weiteren kann dabei auch zusätzlich eine weitere gleichzeitig angewandte Bremsfunktion, z.B. eine Nutzbremsung als Generator, ermöglicht werden.

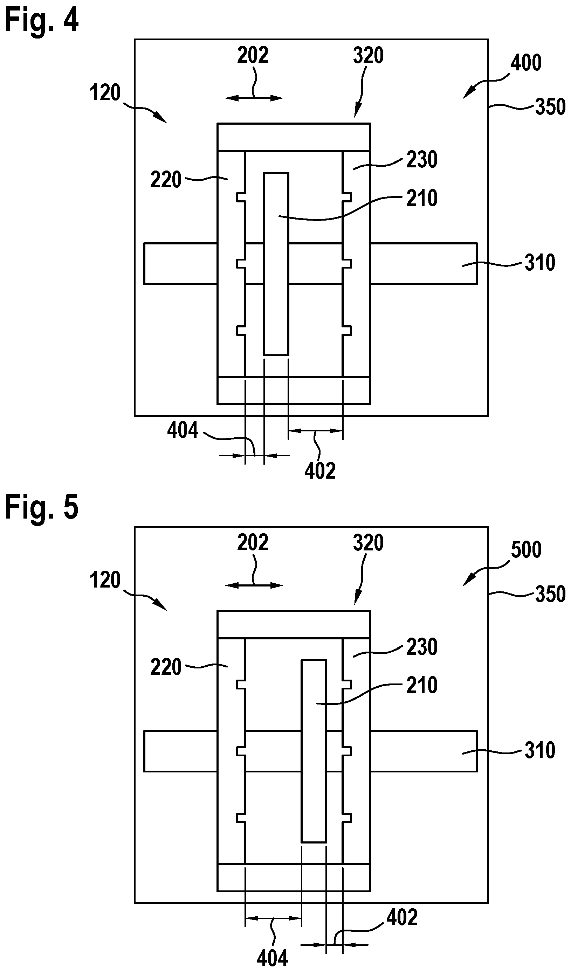

Fig. 4 zeigt den Elektromotor 120 von Fig. 1 bis Fig. 3 in einer Netzbetriebsart 400, in der vorzugsweise der erste Stator 220 bestromt ist. Bevorzugt ist der erste Stator 220 in einem ersten axialen Abstand 404 zum Rotor 210 angeordnet und der zweite Stator 230 ist in einem zweiten axialen Abstand 402 zum Rotor 210 angeordnet. Hierbei sind der erste axiale Abstand 404 und der zweite axiale Abstand 402 bevorzugt Betriebsart-spezifisch einstellbar.

Illustrativ, bzw. in der illustrierten Netzbetriebsart 400, in der der erste Stator 220 bestromt ist, ist der erste axiale Abstand 404 kleiner als der zweite axiale Abstand 402. Hierbei liegt in der Netzbetriebsart 400 der erste axiale Abstand 404 vorzugsweise in einem Bereich von 0,05 mm bis 1 mm und der zweite axiale Abstand 402 weist bevorzugt mindestens 0,06 mm auf.

Fig. 5 zeigt den Elektromotor 120 von Fig. 1 bis Fig. 4 in einer Akkubetriebsart 500, in der der zweite Stator 230 bestromt ist. In der Akkubetriebsart 500 ist vorzugsweise der zweite axiale Abstand 402 kleiner als der erste axiale Abstand 404 eingestellt. Bevorzugt liegt in der Akkubetriebsart 500 der zweite axiale Abstand 402 in einem Bereich von 0,05 mm bis 1 mm und der erste axiale Abstand 404 weist vorzugsweise mindestens 0,06 mm auf.

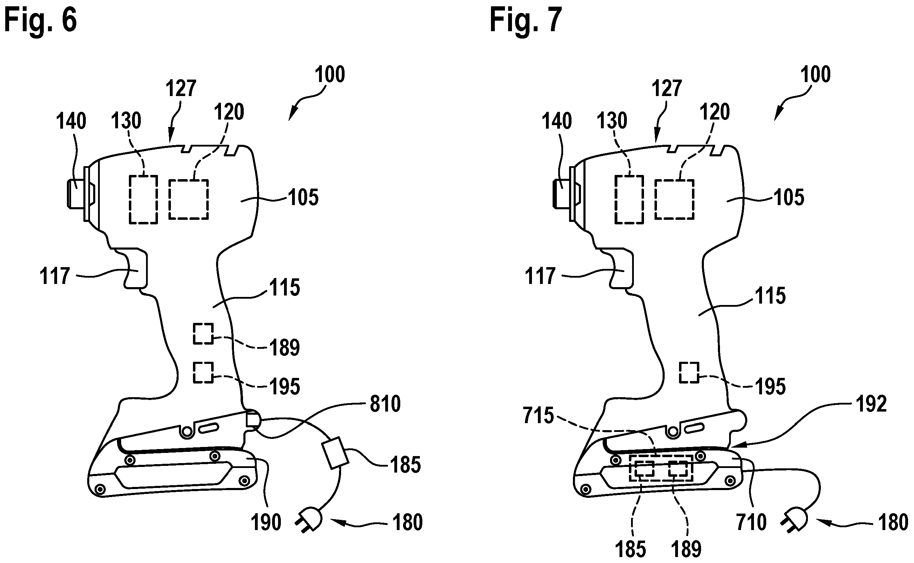

Fig. 6 zeigt das beispielhaft als Handwerkzeugmaschine ausgebildete Elektrowerkzeug 100 von Fig. 1 mit der ersten und zweiten Elektronikbaugruppe 185, 195 von Fig. 1 zur Motorsteuerung. Gemäß der in Fig. 6 gezeigten Ausführungsform ist die erste Elektronikbaugruppe 185 in der Netzleitung 180 angeordnet und die zweite Elektronikbaugruppe 195 ist im Elektrowerkzeug 100, illustrativ in dem Handgriff 115 angeordnet.

Optional ist eine dritte Elektronikbaugruppe 189 vorgesehen, die dazu ausgebildet ist, einen Teil der Funktionen der ersten Elektronikbaugruppe 185 für einen Netzbetrieb abzubilden. Illustrativ ist die dritte Elektronikbaugruppe 189 im Gehäuse 105 des Elektrowerkzeugs 100, insbesondere im Handgriff 115 angeordnet.

Bevorzugt ist die Netzleitung 180 lösbar am Elektrowerkzeug 100 angeordnet. Hierzu weist das Elektrowerkzeug 100, illustrativ das Gehäuse 105, eine Kontaktstelle 810 auf.

Fig. 7 zeigt das beispielhaft als Handwerkzeugmaschine ausgebildete Elektrowerkzeug 100 von Fig. 1 und Fig. 6 mit einer alternativen Anordnung der ersten Elektronikbaugruppe 185 zur Motorsteuerung. Hierbei ist die erste Elektronikbaugruppe 185 als eine an der Akkupackschnittstelle 192 des Elektrowerkzeugs 100 anordenbare, insbesondere einsteckbare Einheit 710 ausgebildet. Der Akkupack 190 von Fig. 1 ist dabei nicht an der Akkupackschnittstelle 192 angeordnet. Die zweite Elektronikbaugruppe 195 ist, wie oben beschrieben, im Elektrowerkzeug 100 angeordnet. Die dritte Elektronikbaugruppe 189 ist bevorzugt in der Einheit 710 angeordnet. Hierbei bilden die erste und dritte Elektronikbaugruppe 185, 189 eine Baugruppeneinheit 715 aus.

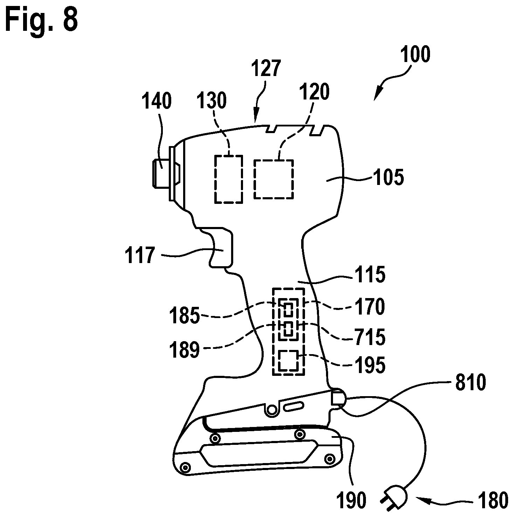

Fig. 8 zeigt das beispielhaft als Handwerkzeugmaschine ausgebildete Elektrowerkzeug 100 von Fig. 1 mit der Elektronikeinheit 170, die die beiden Elektronikbaugruppen 185, 195 aufweist und die im Elektrowerkzeug 100 angeordnet sind. Gemäß einer Ausführungsform ist der Elektronikeinheit 170 die Baugruppeneinheit 715 von Fig. 7, die die erste und dritte Elektronikbaugruppe 185, 189 aufweist, zugeordnet. Hierbei ist die Baugruppeneinheit 715 im Elektrowerkzeug 100, insbesondere im Handgriff 115 angeordnet.

## Patentansprüche

1. Elektromotor (120), insbesondere Axialflussmotor, mit einem Rotor (210) sowie einem ersten und einem zweiten Stator (220, 230), wobei der Rotor (210) mit einer Motorwelle (310) verbunden ist und in axialer Richtung (202) der Motorwelle (310) zwischen dem ersten Stator (220) und dem zweiten Stator (230) angeordnet ist, **dadurch gekennzeichnet, dass** der erste Stator (220) für einen Betrieb mit einem ersten Spannungsniveau, insbesondere einer Netzspannung, ausgeführt ist und der zweite Stator (230) für einen Betrieb mit einem vom ersten Spannungsniveau unterschiedlichen zweiten Spannungsniveau, insbesondere einer Akkuspannung, ausgeführt ist.

2. Elektromotor nach Anspruch 1, **dadurch gekennzeichnet, dass** der erste Stator (220) über eine Netzleitung (180) mit einem Spannungsnetz verbindbar ist, und der zweite Stator (230) mit einem Akkupack (190) verbindbar ist.

3. Elektromotor nach Anspruch 1 oder 2, **dadurch gekennzeichnet, dass** dem ersten Stator (220) eine erste Elektronikbaugruppe (185) und dem zweiten Stator (230) eine zweite Elektronikbaugruppe (195) zugeordnet ist, wobei die erste und zweite Elektronikbaugruppe (185, 195) jeweils zur Motorsteuerung ausgebildet ist.

4. Elektromotor nach einem der vorhergehenden Ansprüche, **dadurch gekennzeichnet, dass** der erste Stator (220) in einem ersten axialen Abstand (404) zum Rotor (210) angeordnet ist, und der zweite Stator (230) in einem zweiten axialen Abstand (402) zum Rotor (210) angeordnet ist, wobei der erste axiale Abstand (404) und der zweite axiale Abstand (402) Betriebsart-spezifisch einstellbar sind.

5. Elektromotor nach Anspruch 4, **dadurch gekennzeichnet, dass** bei einer Bestromung des ersten Stators (220) in einer Netzbetriebsart (400) der erste axiale Abstand (404) kleiner als der zweite axiale Abstand (402) eingestellt ist.

6. Elektromotor nach Anspruch 4 oder 5, **dadurch gekennzeichnet, dass** bei einer Bestromung des zweiten Stators (230) in einer Akkubetriebsart (500) der zweite axiale Abstand (402) kleiner als der erste axiale Abstand (404) eingestellt ist.

7. Elektromotor nach Anspruch 5 oder 6, **dadurch gekennzeichnet, dass** in der Netzbetriebsart (400) der erste axiale Abstand (404) in einem Bereich von 0,05 mm bis 1 mm liegt und der zweite axiale Abstand (402) mindestens 0,06 mm aufweist, und in der Akkubetriebsart (500) der zweite axiale Abstand (402) in einem Bereich von 0,05 mm bis 1 mm liegt und der erste axiale Abstand (404) mindestens 0,06 mm aufweist.

8. Elektromotor nach einem der Ansprüche 1 bis 7, **dadurch gekennzeichnet, dass** der erste und zweite Stator (220, 230) miteinander verbunden sind und eine Statoreinheit (320) ausbilden, wobei eine Verschiebevorrichtung (330) zum axialen Verschieben der Statoreinheit (320) in einem Motorgehäuse (350) vorgesehen ist.

9. Elektromotor nach Anspruch 8, **dadurch gekennzeichnet, dass** die Verschiebevorrichtung (330) dazu ausgebildet ist, bei einem Beenden einer Bestromung des ersten Stators (220) zur Erzeugung und/oder Verstärkung eines Bremseffektes den ersten Stator (220) axial zum Rotor (210) hin zu verschieben, und bei einem Beenden einer Bestromung des zweiten Stators (230) zur Erzeugung und/oder Verstärkung eines Bremseffektes den zweiten Stator (230) axial zum Rotor (210) hin zu verschieben.

10. Elektrowerkzeug (100), insbesondere Handwerkzeugmaschine, mit einem Elektromotor (120) nach einem der vorhergehenden Ansprüche.

11. Elektrowerkzeug nach Anspruch 10 mit einer ersten und zweiten Elektronikbaugruppe (185, 195), **dadurch gekennzeichnet, dass** die erste Elektronikbaugruppe (185) einem Netzbetrieb zugeordnet ist und die zweite Elektronikbaugruppe (195) einem Akkubetrieb zugeordnet ist, wobei die erste und/oder zweite Elektronikbaugruppe (185, 195) in das Elektrowerkzeug (100) integriert sind.

12. Elektrowerkzeug nach Anspruch 10 mit einer ersten und zweiten Elektronikbaugruppe (185, 195), **dadurch gekennzeichnet, dass** die erste Elektronikbaugruppe (185) einem Netzbetrieb zugeordnet ist und die zweite Elektronikbaugruppe (195) einem Akkubetrieb zugeordnet ist, wobei die erste Elektronikbaugruppe (185) in die Netzleitung (180) integriert ist oder als eine in die Akkupackschnittstelle (192) des Elektrowerkzeugs (100) einsteckbare Einheit (710) ausgebildet ist.

13. Elektrowerkzeug nach Anspruch 11 oder 12 mit einer ersten und zweiten Elektronikbaugruppe (185, 195), **dadurch gekennzeichnet, dass** der ersten Elektronikbaugruppe (185) eine dritte Elektronikbaugruppe (189) zugeordnet ist, wobei die dritte Elektronikbaugruppe (189) im Elektrowerkzeug (100) angeordnet ist, in die erste Elektronikeinheit (185) integriert ist oder in der einsteckbaren Einheit (710) angeordnet ist.

14. Elektrowerkzeug nach Anspruch 10 bis 13, **dadurch gekennzeichnet, dass** die Netzleitung (180) lösbar am Elektrowerkzeug (100) angeordnet ist.

## Claims

1. Electric motor (120), in particular axial flux motor, comprising a rotor (210) and a first and a second stator (220, 230), wherein the rotor (210) is connected to a motor shaft (310) and arranged between the first stator (220) and the second stator (230) in the axial direction (202) of the motor shaft (310), **characterized in that** the first stator (220) is designed for operation at a first voltage level, in particular a grid voltage, and the second stator (230) is designed for operation at a second voltage level different from the first voltage level, in particular a rechargeable battery voltage.

2. Electric motor according to Claim 1, **characterized in that** the first stator (220) can be connected to a voltage grid via a grid line (180), and the second stator (230) can be connected to a rechargeable battery pack (190).

3. Electric motor according to Claim 1 or 2, **characterized in that** a first electronics assembly (185) is associated with the first stator (220) and a second electronics assembly (195) is associated with the second stator (230), wherein the first and the second electronics assembly (185, 195) are each designed for motor control.

4. Electric motor according to any of the preceding claims, **characterized in that** the first stator (220) is arranged at a first axial distance (404) from the rotor (210), and the second stator (230) is arranged at a second axial distance (402) from the rotor (210), wherein the first axial distance (404) and the second axial distance (402) can be adjusted in an operating mode-specific manner.

5. Electric motor according to Claim 4, **characterized in that**, when the first stator (220) is energized in a grid operating mode (400), the first axial distance (404) is set to be less than the second axial distance (402).

6. Electric motor according to Claim 4 or 5, **characterized in that**, when the second stator (230) is energized in a rechargeable battery operating mode (500), the second axial distance (402) is set to be less than the first axial distance (404).

7. Electric motor according to Claim 5 or 6, **characterized in that** the first axial distance (404) is in a range of 0.05 mm to 1 mm and the second axial distance (402) is at least 0.06 mm in the grid operating mode (400), and the second axial distance (402) is in a range of 0.05 mm to 1 mm and the first axial distance (404) is at least 0.06 mm in the rechargeable battery operating mode (500).

8. Electric motor according to any of Claims 1 to 7, **characterized in that** the first and the second stator (220, 230) are connected to each other and form a stator unit (320), wherein a displacement device (330) is provided for axially displacing the stator unit (320) in a motor housing (350).

9. Electric motor according to Claim 8, **characterized in that** the displacement device (330) is designed to move the first stator (220) axially towards the rotor (210) when energization of the first stator (220) for generating and/or amplifying a braking effect is ended, and to move the second stator (230) axially towards the rotor (210) when energization of the second stator (230) for generating and/or amplifying a braking effect is ended.

10. Power tool (100), in particular hand-held power tool, comprising an electric motor (120) according to any of the preceding claims.

11. Power tool according to Claim 10 comprising a first and a second electronics assembly (185, 195), **characterized in that** the first electronics assembly (185) is associated with grid operation and the second electronics assembly (195) is associated with rechargeable battery operation, wherein the first and/or the second electronics assembly (185, 195) are/is integrated into the power tool (100).

12. Power tool according to Claim 10 comprising a first and a second electronics assembly (185, 195), **characterized in that** the first electronics assembly (185) is associated with grid operation and the second electronics assembly (195) is associated with rechargeable battery operation, wherein the first electronics assembly (185) is integrated into the grid line (180) or is designed as a unit (710) which can be plugged into the rechargeable battery pack interface (192) of the power tool (100).

13. Power tool according to Claim 11 or 12 comprising a first and a second electronics assembly (185, 195), **characterized in that** a third electronics assembly (189) is associated with the first electronics assembly (185), wherein the third electronics assembly (189) is arranged in the power tool (100), is integrated into the first electronics unit (185) or is arranged in the plug-in unit (710).

14. Power tool according to Claims 10 to 13, **characterized in that** the grid line (180) is detachably arranged on the power tool (100).

## Revendications

1. Moteur électrique (120), en particulier moteur à flux axial, avec un rotor (210) et un premier et un deuxième stator (220, 230), le rotor (210) étant relié à un arbre de moteur (310) et étant disposé entre le premier stator (220) et le deuxième stator (230) dans la direction axiale (202) de l'arbre de moteur (310), **caractérisé en ce que** le premier stator (220) est conçu pour fonctionner à un premier niveau de tension, en particulier à une tension de réseau, et le deuxième stator (230) est conçu pour fonctionner à un deuxième niveau de tension, en particulier à une tension de batterie rechargeable, qui est différent du premier niveau de tension.

2. Moteur électrique selon la revendication 1, **caractérisé en ce que** le premier stator (220) peut être relié à un réseau de tension par une ligne de réseau (180), et le deuxième stator (230) peut être relié à un bloc de batterie rechargeable (190).

3. Moteur électrique selon la revendication 1 ou 2, **caractérisé en ce qu'**un premier module électronique (185) est associé au premier stator (220) et un deuxième module électronique (195) est associé au deuxième stator (230), le premier et le deuxième module électronique (185, 195) étant respectivement formés pour la commande du moteur.

4. Moteur électrique selon l'une des revendications précédentes, **caractérisé en ce que** le premier stator (220) est disposé à une première distance axiale (404) du rotor (210), et le deuxième stator (230) est disposé à une deuxième distance axiale (402) du rotor (210), la première distance axiale (404) et la deuxième distance axiale (402) pouvant être réglées de manière spécifique au type de fonctionnement.

5. Moteur électrique selon la revendication 4, **caractérisé en ce que**, lorsque le premier stator (220) est alimenté en courant dans un mode de fonctionnement sur réseau (400), la première distance axiale (404) est réglée de manière à être inférieure à la deuxième distance axiale (402).

6. Moteur électrique selon la revendication 4 ou 5, **caractérisé en ce que**, lorsque le deuxième stator (230) est alimenté en courant dans un mode de fonctionnement sur batterie rechargeable (500), la deuxième distance axiale (402) est réglée de manière à être inférieure à la première distance axiale (404).

7. Moteur électrique selon la revendication 5 ou 6, **caractérisé en ce que**, dans le mode de fonctionnement sur réseau (400), la première distance axiale (404) se situe dans une plage de 0,05 mm à 1 mm et la deuxième distance axiale (402) est d'au moins 0,06 mm, et, dans le mode de fonctionnement sur batterie rechargeable (500), la deuxième distance axiale (402) se situe dans une plage de 0,05 mm à 1 mm et la première distance axiale (404) est d'au moins 0,06 mm.

8. Moteur électrique selon l'une des revendications 1 à 7, **caractérisé en ce que** le premier et le deuxième stator (220, 230) sont reliés l'un à l'autre et forment une unité de stator (320), un dispositif de coulissement (330) étant prévu pour faire coulisser axialement l'unité de stator (320) dans un carter de moteur (350).

9. Moteur électrique selon la revendication 8, **caractérisé en ce que** le dispositif de coulissement (330) est formé pour faire coulisser le premier stator (220) axialement vers le rotor (210) pour générer et/ou amplifier un effet de freinage lorsqu'une alimentation en courant du premier stator (220) est terminée, et pour faire coulisser le deuxième stator (230) axialement vers le rotor (210) pour générer et/ou amplifier un effet de freinage lorsqu'une alimentation en courant du deuxième stator (230) est terminée.

10. Outil électrique (100), en particulier outil-machine à main, avec un moteur électrique (120) selon l'une des revendications précédentes.

11. Outil électrique selon la revendication 10, avec un premier et un deuxième module électronique (185, 195), **caractérisé en ce que** le premier module électronique (185) est associé au fonctionnement sur réseau et le deuxième module électronique (195) est associé au fonctionnement sur batterie rechargeable, le premier et/ou le deuxième module électronique (185, 195) étant intégrés dans l'outil électrique (100).

12. Outil électrique selon la revendication 10, avec un premier et un deuxième module électronique (185, 195), **caractérisé en ce que** le premier module électronique (185) est associé à un fonctionnement sur réseau et le deuxième module électronique (195) est associé à un fonctionnement sur batterie rechargeable, le premier module électronique (185) étant intégré dans la ligne de réseau (180) ou étant formé comme une unité enfichable (710) dans l'interface de bloc-batterie (192) de l'outil électrique (100).

13. Outil électrique selon la revendication 11 ou 12, avec un premier et un deuxième module électronique (185, 195), **caractérisé en ce qu'**un troisième module électronique (189) est associé au premier module électronique (185), le troisième module électronique (189) étant disposé dans l'outil électrique (100), étant intégré dans la première unité électronique (185) ou étant disposé dans l'unité enfichable (710).

14. Outil électrique selon les revendications 10 à 13, **caractérisé en ce que** la ligne de réseau (180) est disposée de manière amovible sur l'outil électrique (100).
